## Europäisches Patentamt
## European Patent Office
## Office européen des brevets

(11) Veröffentlichungsnummer : **0 160 270**
**B1**

(12)

# EUROPÄISCHE PATENTSCHRIFT

(45) Veröffentlichungstag der Patentschrift :
**15.03.89**

(51) Int. Cl.⁴ : **C 08 J 5/00**, C 08 L 63/00,
C 09 J 3/14

(21) Anmeldenummer : **85105022.9**

(22) Anmeldetag : **25.04.85**

(54) **Verfahren zum Herstellen von Formteilen durch Verpressen von faserigem Material unter gleichzeitiger Verklebung.**

(30) Priorität : **04.05.84 DE 3416473**

(43) Veröffentlichungstag der Anmeldung :
**06.11.85 Patentblatt 85/45**

(45) Bekanntmachung des Hinweises auf die Patenterteilung : **15.03.89 Patentblatt 89/11**

(84) Benannte Vertragsstaaten :
**AT BE CH DE FR GB IT LI NL SE**

(56) Entgegenhaltungen :
**AT--B-- 362 150**
**DE--A-- 1 935 115**
**DE--B-- 1 932 707**
**Die Akte enthält technische Angaben, die nach dem
Eingang der Anmeldung eingereicht wurden und die
nicht in dieser Patentschrift enthalten sind.**

(73) Patentinhaber : **HOECHST AKTIENGESELLSCHAFT**
**Postfach 80 03 20**
**D-6230 Frankfurt am Main 80 (DE)**

**Vöst, Walter**
**Pommernstrasse 3**
**D-8903 Bobingen (DE)**

(72) Erfinder : **Vöst, Walter**
**Pommernstrasse 3**
**D-8903 Bobingen (DE)**
Erfinder : **Schmelzer, Heinz**
**Schlossbergstrasse 15**
**D-8531 Rümmelsheim (DE)**

(74) Vertreter : **Beck, Bernhard et al**
**HOECHST AKTIENGESELLSCHAFT Zentrale Patentabteilung Postfach 80 03 20**
**D-8230 Frankfurt/Main 80 (DE)**

EP 0 160 270 B1

## Beschreibung

Die Erfindung betrifft ein Verfahren zum Herstellen von Formteilen, bei dem faseriges Material mit einem Kleber vermischt und unter Druck bis zum Abbinden des Klebers in einer Form gehalten wird.

Es ist bekannt, wärme- und schalldämmende Formteile, z. B. Platten und Halbschalen, aus faserigem Material herzustellen, indem man das faserige Material mit einem in Wasser oder organischen Lösemitteln gelösten oder dispergierten Kleber versetzt und das Gemisch unter Erwärmen verpreßt. Dabei muß beim Preßvorgang das mit dem Kleber eingebrachte Wasser oder Lösemittel entfernt werden, was zu langen Taktzeiten und hohem Energieaufwand führt. Außerdem ist die Menge des einzubringenden Klebers begrenzt, weil stets mindestens etwa die gleiche Menge Wasser oder Lösemittel eingebracht wird. Es ist daher schwierig, verhältnismäßig steife Formteile herzustellen.

Besteht das faserige Material aus einem Thermoplasten, so ist es grundsätzlich möglich, auf den Kleber zu verzichten und Formteile durch punktuelles Verschweißen der Fasern herzustellen. Da aber die Wärme beim Verpressen zunächst auf die Oberfläche etwa eines Fasergeleges wirkt, tritt die Verschweißung auch zunächst dort ein, und die Kernlage bleibt, vor allem bei stärkeren Gelegen, unverschweißt.

Es ist auch ein Verfahren zur Herstellung von schnell härtbaren, lagerstabilen mit Epoxidharz-/Härtergemischen beschichteten Substraten bekannt, die vorzugsweise zur Herstellung von Schichtpreßstoffen dienen. Durch die Verfahrensweise wird erreicht, daß die aufgebrachten substanzen fest an dem Substrat haften, ohne ausgehärtet zu sein (AT-B-362 150). Gehärtete Formteile, beispielsweise aus Reißwolle und Harzkombination besitzen einen harten und steifen Verbund.

Härtbare Zusammensetzungen, die aus Vinylestercopolymerisaten, Epoxidharz und einem Härter für Epoxidharze bestehen, sind auch bekannt (DE-B-1 932 707, DE-AS-1 935 115). Verwendet werden derartige Zusammensetzungen als härtbare Klebstoffe. Angaben über die Zusammensetzung von Mischungen, die besonders gute Ergebnisse bei der Herstellung von Formteilen aus faserigem Material zeigen, können dem Stand der Technik jedoch nicht entnommen werden.

Es wurde nun gefunden, daß man Formteile aus faserigem Material mit sehr guten Eigenschaften erhält, wenn man das faserige Material mit einem pulverförmigen Gemisch aus einem Schmelzkleber auf der Basis eines Copolymerisats aus Vinylester und mindestens einem weiteren Vinylmonomeren, einem festen Epoxidharz und einem flüssigen oder vorzugsweise festen Härter für das Epoxidharz vermischt und das zu verpressende Gemisch, enthaltend 80-95 Gewichtsteile faseriges Material und 5-20 Gewichtsteile Kleber in einer Form unter Druck auf eine Temperatur erwärmt, bei der der Schmelzkleber flüssig wird und das Epoxidharz mit seinem Härter reagiert. Wenn ein flüssiger Härter verwendet wird, ist die Zusammensetzung so abzustimmen, daß die Kombination von Epoxydharz, Härter und Schmelzkleber fest ist. Gegebenenfalls können flüssige oder pastöse Härter auch mit an sich bekannten hochdispersen kapillaraktiven Kieselsäuren in eine feste Form gebracht werden analog der in der DE-PS 2 202 907 für flüssige bis pastöse Lackhilfsmittel beschriebenen Methode.

Als Schmelzkleber eignen sich grundsätzlich die bekannten Copolymerisate aus Vinylestern und weiteren Vinylmonomeren, vorzugsweise Vinylacetat und Äthylen. Zweckmäßig verwendet man jedoch Copolymerisate, die außerdem Amide der Acryl- und/oder Methacrylsäure oder deren N-Methylolverbindungen beispielsweise Acrylamid, Methacrylamid, N-Methylolacrylamid und N-Methylolmethacrylamid enthalten, da diese, gegebenenfalls unter Zusatz von Metallalkoholaten, in der Wärme vernetzen. Man erhält diese Schmelzkleber besonders günstig in Pulverform, wenn man die Copolymerisate als wäßrige Dispersionen herstellt und durch Sprühtrocknung, gegebenenfalls in Gegenwart einer geringen Menge hydrophober Kieselsäure, nach bekannten Verfahren in die feste Form überführt.

Die Menge des zur Copolymerisation mit einem Carbonsäureamid eingesetzten Vinylmonomer-Gemisches beträgt 75 bis 95 Gew.-%, vorzugsweise 85 bis 93 Gew.-% der Gesamtmonomermenge, der Anteil des Vinylesters beträgt mindestens 50 . Gew.-%, vorzugsweise 75 bis 95 Gew.-% der Gesamtmenge der Vinylmonomeren und das Carbonsäureamid wird in Mengen von 5 bis 20 Gew.-%, vorzugsweise 7 bis 15 Gew.-%, bezogen auf die Gesamtmonomermenge eingesetzt.

Das Epoxid muß fest sein. Geeignet sind z. B. Polyclycidyläther des Diphenylolmethan oder -propan (Biphenol F oder A) insbesondere die Polyglycidylether von Bisphenol A mit Epoxidäquivalentgewichten von etwa 500 bis etwa 2000. Als Härter kommen in erster Linie feste Anhydridhärter oder feste Polyaminoamide in Frage. Beispiele für Anhydridhärter sind die Anhydride der Phthalsäure, Tetrahydrophthalsäure, Hexahydrophthalsäure und deren Methylderivate, Trimellithsäure, Pyromellithsäure, Endomethylentetrahydrophthalsäure, Dodecenylbernsteinsäure, vorzugsweise jedoch die Bis-Ester der Trimellithsäure mit Diolen wie Äthylenglykol und Propylenglykol. Polyaminoamide sind Umsetzungsprodukte von aliphatischen Fettsäuren (16 bis 22 C-Atome) mit Polyamiden wie Diäthylentriamin, Triäthylentetramin u.a. Di-, tri- oder tetramere Fettsäuren sind hierbei eingeschlossen.

Epoxidharz und Härter werden im allgemeinen im Gewichtsverhältnis von 70-90 : 10-30, vorzugsweise 75-85 : 15-25 Teilen eingesetzt.

Das Klebergemisch enthält Schmelzkleber und Epoxidharz/-Härtergemisch in Mengen von etwa 60-85 zu 15-40, vorzugsweise 65-80 zu 20-35 Gewichtsprozent, wobei mit höherem Gehalt an Epoxidharz die erhaltenen Formteile im allgemeinen steifer werden.

Dem Schmelzkleber können Metallverbindungen eines zweiwertigen Alkohols mit 2 bis 6 C-Atomen zugegeben werden, um den Vernetzungsgrad zu erhöhen. Das Metallatom in den vernetzend wirkenden Substanzen ist z. B. Zink, Magnesium, Bor oder Titan, vorzugsweise aber Aluminium. Die Metallverbindungen werden in Mengen von 0,01 bis 10, vorzugsweise 3 bis 6 Gew.-% (als 100 %ige Substanz berechnet) eingesetzt, bezogen auf die Summe des Copolymerisats und der Metallverbindung.

Das zu verpressende Gemisch enthält 80-95 Gewichtsteile faseriges Material und 5-20 Gewichtsteile Kleber.

Die Verarbeitung des faserigen, mit dem Schmelzkleber vermischten Materials wird im allgemeinen in heizbaren Formen oder Pressen vorgenommen. Die für die Härtung erforderliche Temperatur beträgt 150-240, vorzugsweise 180-200 °C. Sie ist abhängig von der Zeit der Hitzebehandlung.

Als faseriges Material eignen sich beispielsweise Reißwolle, Holzspäne und gerissene Papierabfälle. Mit besonderem Vorteil kann man Abfälle aus der Verarbeitung von Kunstfasern, insbesondere Fasern aus Polyethylenterephthalat, im allgemeinen als Polyesterfasern bezeichnet, verwenden, die in Form von Reißwolle eingesetzt werden. Vorzugsweise beträgt das Verhältnis von Reißwolle zu pulverförmigem Kleber 90 :10 Gewichtsteile.

Gemäß der Erfindung hergestellte Formteile, wie Dämmplatten, Rolladenkästen und Halbschalen für die Rohrisolierung, ergeben hohe Wärme- und Schalldämmung. Wenn als faseriges Material Reißwolle aus Polyesterfasern verwendet wird, so sind die Formteile außerdem unter wechselnden Temperaturen und Luftfeuchtigkeiten weitgehend formstabil, und ihre Wasseraufnahme ist gering.

Zur Herstellung von einer 1 m² Platte von 10 mm Stärke wurden beispielsweise 3,6 kg Reißwolle aus Polyesterspunbondabfällen mit 400 g des Klebers gemischt. Der Kleber bestand aus 80 Gewichtsteilen einer Mischung aus 75,5 Gewichtsteilen eines handelsüblichen Copolymerisats aus Äthylen, Vinylacetat und N-Methylolacrylamid (® Mowilith LDM 1160 P der Fa. Hoechst AG) sowie 4,5 Gewichtsteilen Butandiolat, das durch Umsetzung von in Isobutanol gelöstem Aluminiumacetessigsäureäthylester mit Butandiol-1,4 und Aufarbeitung zum Festprodukt erhältlich ist, 16 Gewichtsteilen eines Polyglycidyläthers von Bisphenol A mit einem Epoxidäquivalent von etwa 1000 und 4 Gewichtsteilen Äthylenglykol-bis-trimellithat. Dieses Gemisch wurde in einer beheizten Horizontalpresse 5 Minuten lang bei 200 °C und 350 bar verpreßt.

Die erhaltene Dämmplatte von 10 mm Stärke hatte ein Flächengewicht von 4 kg/m², eine Wärmeleitfähigkeit von 0,057 W/mK, einen Wärmedurchlaßwiderstand von 0,44 m² K/W und ein Trittschallverbesserungsmaß, gemessen nach DIN 52210 von 32 dB. Die Wasseraufnahme bei 20 °C betrug $1,73 \cdot 10^{-2}$ Gew.-%/% relative Luftfeuchtigkeit. Der thermische Ausdehnungskoeffizient bei 50 % relativer Luftfeuchtigkeit im Temperaturbereich von 0-50 °C wurde zu $1,53 \cdot 10^{-5}$ K$^{-1}$ ermittelt. Die Platte weist also eine hohe Wärme- und Tritt schalldämmung auf und ist unter wechselnden Temperaturen und Luftfeuchtigkeiten sehr formstabil.

## Patentansprüche

1. Verfahren zum Herstellen von Formteilen, bei dem ein faseriges Material mit einem Kleber vermischt und unter Druck bis zum Abbinden des Klebers in einer Form gehalten wird, dadurch gekennzeichnet, daß man das faserige Material mit einem pulverförmigen Gemisch aus einem Schmelzkleber auf der Basis eines Copolymerisats aus Vinylester und mindestens einem weiteren Vinylmononomeren, einem festen Epoxidharz und einem Härter für das Epoxidharz vermischt und das zu verpressende Gemisch, enthaltend 80-95 Gewichtsteile faseriges Material und 5-20 Gewichtsteile Kleber, in einer Form unter Druck auf eine Temperatur erwärmt, bei der der Schmelzkleber flüssig wird und bei der das Epoxidharz mit seinem Härter reagiert.

2. Verfahren nach Anspruch 1, dadurch gekennzeichnet, daß als weiteres Vinylmonomere Äthylen eingesetzt wird.

3. Verfahren nach Anspruch 2, dadurch gekennzeichnet, daß zusätzlich ein Amid der Acryl- und/oder Methacrylsäure oder deren N-Methylolverbindungen eingesetzt wird.

4. Verfahren nach einem oder mehreren der Ansprüche 1 bis 3, dadurch gekennzeichnet, daß als Schmelzkleber ein in der Wärme vernetzbares Copolymerisat aus Äthylen, Vinylacetat und N-Methylolacrylamid zusammen mit oder in Abwesenheit von einer Metallverbindung eines zweiwertigen Alkohols mit 2-6 C-Atomen verwendet wird.

5. Verfahren nach einem oder mehreren der Ansprüche 1 bis 4, dadurch gekennzeichnet, daß als Epoxidharz ein Polyglycidyläther von Bisphenol A mit einem Epoxidäquivalent von 500 bis 2000 verwendet wird.

6. Verfahren nach einem oder mehreren der Ansprüche 1 bis 5, dadurch gekennzeichnet, daß der pulverförmige Kleber zu etwa 65-80 Gew.-% aus dem Schmelzkleber und zu etwa 20 bis 35 Gew.-% aus dem Gemisch aus Epoxidharz und Härter besteht, wobei das Gewichtsverhältnis von Epoxidharz zu Härter 70-90 :10-30, vorzugsweise 75-85 :15-25 beträgt.

7. Verfahren nach einem oder mehreren der Ansprüche 1 bis 6, dadurch gekennzeichnet, daß die Härtungstemperatur 150-240, vorzugsweise 180-220 °C beträgt.

8. Verfahren nach einem oder mehreren der Ansprüche 4 bis 7, dadurch gekennzeichnet, daß die Metallverbindung in Mengen von 0,01 bis 10, vorzugsweise 3 bis 6 Gew.-%, als 100 %ige Substanz berechnet, bezogen auf die Summe des Copolymerisats und der Metallverbindung eingesetzt wird.

9. Verfahren nach einem oder mehreren der Ansprüche 1 bis 8, dadurch gekennzeichnet, daß als faseriges Material eine Reißwolle aus Kunstfaser, insbesondere Polyesterfaser verwendet wird und daß man Reißwolle und pulverförmigen Kleber im Gewichtsverhältnis von etwa 90 : 10 einsetzt.

10. Verwendung der nach Anspruch 1 hergestellten Formteile als Dämmplatten, Rolladenkästen und Halbschalen für die Rohrisolierung.

## Claims

1. A process for preparing moldings by mixing a fibrous material with an adhesive and maintaining the mixture under pressure in a mold until the adhesive has set, which comprises mixing the fibrous material with a pulverulent mixture of a hot-melt adhesive based on a copolymer of vinyl ester and at least one further vinyl monomer, a solid epoxy resin and a curing agent for the epoxy resin and heating the resulting mixture containing 80-95 parts by weight of a fibrous material and 5-20 parts by weight of adhesive, under pressure in a mold to a temperature at which the hot-melt adhesive becomes liquid and the epoxy resin reacts with its curing agent.

2. The process as claimed in claim 1, wherein ethylene is used as a further vinyl monomer.

3. The process as claimed in claim 2, wherein an additional component used is an amide of acrylic and/or methacrylic acid or N-methylol compounds thereof.

4. The process as claimed in one or more of claims 1 to 3, wherein the hot-melt adhesive used is a heatcrosslinkable copolymer of ethylene, vinyl acetate and N-methylolacrylamide in the presence or absence of a metal compound of a dihydric alcohol of 2-6 carbon atoms.

5. The process as claimed in one or more of claims 1 to 4, wherein the epoxy resin used is a polyglycidyl ether of bisphenol A having an epoxy equivalent of 500 to 2,000.

6. The process as claimed in one or more of claims 1 to 5, wherein the pulverulent adhesive is composed to about 65-80 % by weight of the hot-melt adhesive and to about 20 to 35 % by weight of the mixture of epoxy resin and curing agent, the weight ratio of epoxy resin to curing agent being 70-90 :10-30, preferably 75-85 :15-25.

7. The process as claimed in one or more of claims 1 to 6, wherein the curing temperature is 150-240 °C, preferably 180-200 °C.

8. The process as claimed in one or more of claims 4 to 7, wherein the metal compound is used in amounts of 0.01 to 10, preferably 3 to 6 % by weight, calculated as 100 % pure substance, relative to the total amount of copolymer and metal compound.

9. The process as claimed in one or more of claims 1 to 8, wherein the fibrous material used is shoddy from synthetic fiber, in particular polyester fiber, and wherein shoddy and pulverulent adhesive are employed in a weight ratio of about 90 :10.

10. Use of the moldings prepared as claimed in claim 1, as insulating boards, roller blind boxes and half-shells for pipe insulation.

## Revendications

1. Procédé pour fabriquer des objets moulés selon lequel on mélange une matière fibreuse avec une colle et on la maintient sous pression dans un moule jusqu'à ce que la colle ait durci, procédé caractérisé en ce qu'on mélange la matière fibreuse avec un mélange pulvérulent constitué d'une colle fusible à base d'un copolymère dérivant d'un ester vinylique et d'au moins un autre monomère vinylique, d'une résine époxydique solide et d'un durcisseur pour la résine époxydique, et on chauffe le mélange à mouler par compression, qui contient de 80 à 95 parties en poids de la matière fibreuse et de 5 à 20 parties en poids de la colle, dans un moule, sous pression et à une température à laquelle la colle fusible devient liquide et à laquelle la résine époxydique réagit avec son durcisseur.

2. Procédé selon la revendication 1 caractérisé en ce qu'on utilise l'éthylène comme autre monomère vinylique.

3. Procédé selon la revendication 2 caractérisé en ce qu'on utilise en outre un amide de l'acide acrylique et/ou de l'acide méthacrylique ou des dérivés N-méthyloliques de ces amides.

4. Procédé selon l'une quelconque des revendications 1 à 3, caractérisé en ce qu'on utilise, comme colle fusible, un copolymère de l'éthylène, de l'acétate de vinyle et du N-méthylol-acrylamide, réticulable à chaud, avec ou sans un dérivé métallique d'un diol contenant de 2 à 6 atomes de carbone.

5. Procédé selon l'une quelconque des revendications 1 à 4, caractérisé en ce qu'on utilise, comme résine époxydique, un éther polyglycidylique du bis-phénol A ayant un équivalent d'époxy de 500 à 2000.

6. Procédé selon l'une quelconque des revendications 1 à 5 caractérisé en ce que la colle pulvérulente est constituée pour environ 65 à 80 % en poids de la colle fusible et pour environ 20 à 35 % en poids du mélange de la résine époxydique et du durcisseur, le rapport pondéral de la résine époxydique au durcisseur étant de 70-90 :10-30, de préférence de 75-85 :15-25 parties.

7. Procédé selon l'une quelconque des revendications 1 à 6, caractérisé en ce que la température de durcissement est de 150-240 °C, de préférence de 180-200 °C.

8. Procédé selon l'une quelconque des revendications 4 à 7, caractérisé en ce que le composé métallique est mis en jeu en des quantités de 0,01 à 10 % en poids, de préférence de 3 à 6 % en poids, considéré comme le composé à 100 %, par rapport à la somme du copolymère et du composé métallique.

9. Procédé selon l'une quelconque des revendications 1 à 8, caractérisé en ce qu'on utilise, comme matière fibreuse, une laine renaissance en fibres synthétiques, plus particulièrement en fibres de polyesters, et en ce qu'on met en jeu la laine renaissance et la colle pulvérulente dans un rapport pondéral d'environ 90 :10.

10. Application des objets moulés fabriqués selon la revendication 1 comme panneaux isolants, châssis de volets roulants et semi-coquilles pour l'isolement de tubes.